# EUROPÄISCHE PATENTSCHRIFT

(11) **EP 1 350 575 B1**
(45) Veröffentlichungstag und Bekanntmachung des Hinweises auf die Patenterteilung: **11.10.2006**
(21) Anmeldenummer: 03003145.4
(22) Anmeldetag: 10.02.2003
(51) Int. Cl.: B05D 5/00, B05D 1/18

(54) **Oberfläche mit schaltbarer Ultrahydrophobie und Verfahren zur Realisierung**
Surface with switchable ultrahydrophobicity and preparation process thereof
Surface avec ultrahydrophobie commutable, et procédé de fabrication associé

(30) Priorität: 14.02.2002 DE 10206481
(43) Veröffentlichungstag der Anmeldung: 08.10.2003
(73) Patentinhaber: Leibniz-Institut für Polymerforschung Dresden e.V., 01069 Dresden (DE)
(72) Erfinder: Nitschke, Mirko, Dr., 01217 Dresden (DE); Minko, Sergiy, Dr., 01099 Dresden (DE); Motornov, Mikhail, 01187 Dresden (DE); Grundke, Karin, Dr., 01109 Dresden (DE); Stamm, Manfred, Prof. Dr., 01705 Freital (DE)
(74) Vertreter: Rauschenbach, Marion

(56) Entgegenhaltungen:
- DE-A- 19 910 811
- MINKO, S., USOV, D., GORESHNIK, E., STAMM, M.: "Environment-Adopting Surfaces with Reversibly Switchable Morphology" MACROMOL. RAPID COMMUN., Bd. 22, Nr. 3, 20. Februar 2001 (2001-02-20), Seiten 206-211, XP002283062 Wiley, Weinheim
- WANG J ET AL: "SWITCHABLE SURFACE PROPERTIES AND INTERFACIAL ADHESION CONTROL ON NOVEL CFABC POLYMER BRUSH MODIFIED SURFACES" PROCEEDINGS OF THE ANNUAL MEETING - ADHESION SOCIETY. MEETING, THE SOCIETY, YORKTOWN HEIGHTS, NY,, US, - 28. Februar 2001 (2001-02-28) Seiten 221-223, XP001154222 ISSN: 1086-9506

## Beschreibung

Die Erfindung bezieht sich auf das Gebiet der Physikalische Chemie und betrifft Oberflächen mit einer schaltbaren Ultrahydrophobie, wie sie beispielsweise in Sensoren oder Microdevices zum Einsatz kommen können und ein Verfahren zur Realisierung der schaltbaren Ultrahydrophobie.

Oberflächen mit ultrahydrophoben Eigenschaften sind bekannt (Barthlott, W. u. Neinhuis, C: Planta 202, 1 (1997)). Das Konzept der Ultrahydrophobie lehnt sich an das natürliche Vorbild der Lotuspflanze an. Zur technischen Herstellung ultrahydrophober Oberflächen werden unterschiedlichste Materialien und Methoden eingesetzt, um die entsprechende Morphologie in Kombination mit der notwendigen intrinsischen Benetzbarkeit zu erreichen (Morra, M. u.a., Langmuir 5, 872 (1989); Chen, W., u.a., Langmuir 15, 3395 (1999); Youngblood, J.P., u.a., Macromolecules 32, 6800 (1999); Öner, D, u.a., Langmuir 16, 7777 (2000); Coulson, S.R., u.a., J. Phys. Chem. B 104, 8836 (2000)). Es wird von Ultrahydrophobie gesprochen, wenn eine rauhe Oberfläche vorliegt, deren intrinsische Benetzbarkeit so gering ist, dass Wasser nicht mehr in die Bereiche zwischen den Erhebungen der rauhen Struktur eindringen kann. Die Begriffe Ultrahydrophobie, Superhydrophobie und Lotos-Effekt® werden dabei in der Literatur weitgehend synonym verwendet. In theoretischen Darstellungen findet sich auch der formal präzisere Begriff der Kompositoberfläche.

Weiterhin sind Oberflächen bekannt, die eine schaltbare Benetzbarkeit aufweisen (Minko, S. u.a.: Macromol. Rapid. Commun. 22 (2002) S. 206- 211). Das Konzept der schaltbaren Benetzbarkeit beruht auf Phasenseparationseffekten in mehrkomponentigen Polymerbürsten, die wechselseitig hydrophile und hydrophobe Eigenschaften hervortreten lassen. Dazu wird auf eine ebene Oberfläche eine aus zwei Komponenten bestehende Schicht aufgepfropft, wobei die Komponenten hinsichtlich ihrer Benetzbarkeit unterschiedliche Eigenschaften aufweisen (hydrophil oder hydrophob). Ein wechselseitiges Kollabieren der Komponenten (Phasenseparation), hervorgerufen durch äußere Parameter, führt zu einer reversiblen Änderung der Benetzungseigenschaften der Oberfläche. Die Phasenseparation kann beispielsweise durch Kontakt mit selektiven Lösungsmitteln für die zwei Komponenten herbeigeführt werden. Nach Kontakt mit einem der Lösungsmittel wird die jeweils lösliche Komponente an der Oberfläche angereichert und deren Eigenschaften (hydrophil oder hydrophob) bestimmen das Verhalten der Oberfläche. Die Phasenseparation kann in der beschriebenen Weise beliebig oft wiederholt werden.
Die auf diesem Wege erreichbare Schaltamplitude des Kontaktwinkels ist jedoch insbesondere zu hohen Werten hin limitiert.

Aufgabe der Erfindung ist es, Oberflächen mit einer schaltbaren Ultrahydrophobie anzugeben, die relativ einfach realisierbar sind und eine große Schaltamplitude aufweisen.

Die Aufgabe wird durch die in den Ansprüchen angegebene Erfindung gelöst. Weiterbildungen sind Gegenstand der Unteransprüche.

Die Aufgabe wird gelöst, durch die Kombination der schaltbaren Benetzbarkeit mit dem Effekt der Ultrahydrophobie.
Das Phänomen der Ultrahydrophobie setzt neben einer geeigneten Rauhigkeit der Oberfläche einen Minimalwert des intrinsischen Kontaktwinkels voraus. Bei Überschreiten dieses Minimalwertes erfolgt der Übergang zur Ultrahydrophobie für eine gegebene Rauhigkeit nahezu schlagartig, d.h. der statische Kontaktwinkel ändert sich um die größtmögliche Amplitude von einem sehr kleinen Wert auf nahezu 180 Grad. Die Kontaktwinkelhysterese verschwindet.
An dieser Stelle setzt der zentrale Gedanke der Erfindung an. Versieht man eine rauhe und damit potentiell ultrahydrophobe Oberfläche mit einer schaltbaren intrinsischen Benetzbarkeit, wobei im Rahmen des Schaltens ein reversibler Übergang zu einer Kompositoberfläche im Sinne der Cassie-Baxter-Theorie erfolgt (K. Grundke, Handbook of Applied Surface and Colloid Chemistry, Ed. K. Holmberg - John Wiley & Sons Ltd. 2001, Chapter 7, pp. 129-134), so genügt eine relativ kleine Schaltamplitude um den Wert des kritischen intrinsischen Kontaktwinkels herum für den Übergang von einer vollständig benetzenden zu einer ultrahydrophoben Oberfläche. Mit anderen Worten, durch die Wahl eine Oberflächenmorphologie nach den Kriterien der Ultrahydrophobie lässt sich der Bereich der praktisch erzielbaren Schaltamplituden erheblich erweitern.
Realisiert wird diese schaltbare Ultrahydrophobie durch das Aufbringen einer im wesentlichen durchgehenden Dünnschicht auf die rauhe Oberfläche, wobei die Dünnschicht aus mindestens einer hydrophilen und einer hydrophoben Komponente besteht, die durch Phasenseparation wechselseitig an der Oberfläche angereichert werden.
Vorteilhaft ist es, wenn die Dünnschicht als mehrkomponentige Polymerbürste ausgeführt ist und die Phasenseparation durch Kontakt mit selektiven Lösungsmitteln für deren Komponenten realisiert wird.

Im weiteren wird die Erfindung an einem Ausführungsbeispiel näher erläutert.

### Beispiel:

### Substratmaterial

- Polytetrafluorethylen (PTFE) Folie 0,5mm dick (Hersteller Nünchritz GmbH)
- Reinigung durch Extraktion in Toluen

### Erzeugung der Rauhigkeit durch Plasmaätzen

- Apparatur: MicroSys (Hersteller Roth&Rau, Wüstenbrand)
- Plasma: 13,56 MHz Hochfrequenzanregung, Substrat auf der gespeisten Elektrode, Prozeßgas Sauerstoff, Gasfluß 10 sccm, Prozeßdruck 2*10⁻² mbar, effektive Leistung 200 W, Self Bias Spannung 1000V, Behandlungszeit 10 min
- Reinigung im Ultraschallbad in Chloroform
- Resultat: Rauhigkeit nach AFM Messungen ca. 2 Mikrometer (RMS)

### Aktivierung der Oberfläche für Grafting

- Apparatur: MicroSys (Hersteller Roth&Rau, Wüstenbrand)
- Plasma: 2,46 GHz Mikrowellen ECR Anregung, Substrat in 200mm Entfernung vom Anregungsvolumen der Plasmaquelle, Prozeßgas Ammoniak, Gasfluß 15 sccm, Prozeßdruck 7*10⁻³ mbar, effektive Leistung 220 W, Behandlungszeit 1 min
- Resultat: Stickstoffgehalt der Oberfläche nach XPS Messungen ca. 15 at%, keine Änderung der Morphologie durch Aktivierung im Mikrowellenplasma nach REM Aufnahmen.

### Grafting

- Beschichten der rauhen und aktivierten Oberfläche mit carboxy terminiertem poly(stryren-co-2,3,4,5,6-pentafluorostyrene) (Masseverhältnis 80:20), Mₙ= 20.000 g/mol mittels SpinCoating aus einprozentiger Lösung in Toluen.
- Tempern für 1h bei 170 °C.
- Entfernung des ungebundenen Polymers durch Soxhlet Extraktion in Toluen.
- Beschichten der Oberfläche mit carboxy terminiertem poly(2-vinylpyridine), Mₙ= 49.000 g/mol mittels SpinCoating aus einprozentiger Lösung in THF.
- Tempern für 24h bei 170 °C.
- Entfernung des ungebundenen Polymers durch Soxhlet Extraktion in THF.
- Wiederholung der Grafting-Prozedur für poly(2-vinylpyridine).
- Resultat: nach Toluen Kontaktwinkel 160°, Verschwinden der Kontaktwinkelhysterese, Abrollen des Tropfens, nach saurem Wasser (pH= 2,0; HCl) vollständige Benetzung (Kontaktwinkel <10°), Eindringen der Flüssigkeit in die Kapillaren der rauhen Struktur.

## Patentansprüche

1. Rauhe Oberfläche mit einer schaltbaren intrinsischen Benetzbarkeit, wobei im Rahmen des Schaltens ein reversibler Übergang zu einer Kompositoberfläche im Sinne der Cassie-Baxter-Theorie erfolgt umfassend ein Substrat, das mit einer Dünnschicht mit schaltbarer Benetzbarkeit versehen ist, **dadurch gekennzeichnet, dass** das Susbtrat eine rauhe Oberfläche aufweist, wodurch die Schaltamplitude des Kontaktwinkels gegenüber der Schaltamplitude an einer glatten Oberfläche verstärkt ist.

2. Oberfläche nach Anspruch 1, wobei die intrinsische Benetzbarkeit durch Temperaturvariation, pH Variation, elektrische Felder oder Kontakt mit selektiven Lösungsmitteln geschaltet ist.

3. Verfahren zur Realisierung der schaltbaren Ultrahydrophobie, indem auf eine rauhe Oberfläche mit ultrahydrophoben Eigenschaften eine im wesentlichen durchgehende Dünnschicht aufgebracht wird, wobei die Dünnschicht aus mindestens einer hydrophilen und einer hydrophoben Komponente besteht, die durch Phasenseparation wechselseitig an der Oberfläche angereichert werden.

4. Verfahren nach Anspruch 3 wobei die Dünnschicht als mehrkomponentige Polymerbürste ausgeführt ist und die Phasenseparation durch Kontakt mit selektiven Lösungsmitteln für deren Komponenten realisiert wird.

5. Verfahren nach Anspruch 3 wobei die Dünnschicht als mehrkomponentige Polymerbürste ausgeführt ist und zur Einstellung eines vorgewählten Zustandes die Phasenseparation durch reversibles cross-linking unterbunden wird.

## Claims

1. Rough surface with switchable, intrinsic wettability, where switching imparts reversible transition to a composite surface within the meaning of Cassie-Baxter theory, encompassing a substrate which has been provided with a thin layer with switchable wettability, **characterized in that** the substrate has a rough surface, by virtue of which the switching amplitude of the contact angle has been increased with respect to the switching amplitude of a smooth surface.

2. Surface according to Claim 1, where the intrinsic wettability has been switched via temperature variation, pH variation, electrical fields or contact with selective solvents.

3. Process for implementing a switchable level of ultra-hydrophobic properties, by applying an in essence continuous thin layer to a rough surface with ultra-hydrophobic properties, the thin layer being composed of at least one hydrophilic and one hydrophobic component, their concentration being increased in alternation at the surface via phase separation.

4. Process according to Claim 3, where the thin layer has been designed as a multicomponent polymer brush and the phase separation is realized via contact with selective solvents for components thereof.

5. Process according to Claim 3, where the thin layer has been designed as a multicomponent polymer brush and, for setting of a preselected condition, the phase separation is suppressed via reversible cross-linking.

## Revendications

1. Surface rugueuse dotée d'une mouillabilité intrinsèque variable dans le cadre de laquelle a lieu un transfert réversible à une surface composite au sens de la théorie de Cassie-Baxter et qui comprend un substrat doté d'une mince couche à mouillabilité variable, **caractérisée en ce que** le substrat présente une surface rugueuse, l'amplitude de variation de l'angle de contact étant supérieure à l'amplitude de variation sur une surface lisse.

2. Surface selon la revendication 1, dans laquelle la mouillabilité intrinsèque est modifiée par variation de la température, du pH, du champ électrique ou par un contact avec des solvants sélectifs.

3. Procédé d'obtention d'une ultrahydrophobie variable par application d'une mince couche essentiellement continue sur une surface rugueuse dotée de propriétés ultrahydrophobes, la mince couche étant constituée d'au moins un composant hydrophobe et d'un composant hydrophile dont les surfaces sont enrichies alternativement par séparation de phases.

4. Procédé selon la revendication 3, dans lequel la mince couche est réalisée sous la forme d'une brosse polymère à plusieurs composants, la séparation des phases étant réalisée par contact avec des solvants sélectifs vis-à-vis de ces composants.

5. Procédé selon la revendication 3, dans lequel la couche mince est réalisée sous la forme d'une brosse polymère à plusieurs composants, la séparation des phases étant empêchée par réticulation réversible en vue d'établir un état présélectionné.
